# EUROPÄISCHE PATENTANMELDUNG

(11) **EP 2 287 691 A1**
(43) Veröffentlichungstag der Anmeldung: **23.02.2011**
(21) Anmeldenummer: 09167673.4
(22) Anmeldetag: 11.08.2009
(51) Int. Cl.: G05B 23/02

(54) **Vorrichtung zum Zugriff auf elektronische Fahrzeugkomponenten**

(71) Anmelder: Deutsche Telekom AG, 53113 Bonn (DE)
(72) Erfinder: Schoppe, Peter, 82237, Wörthsee (DE); Hirsch, Thomas, 73278, Schlierbach (DE); Pasch, Martin, 89077, Ulm (DE); Bühler, Rupert, 70771, Leinfelden-Echterdingen (DE); Schneider, Achim, 71154, Nufringen (DE)
(74) Vertreter: Bucher, Ralf Christian

(57) **Zusammenfassung**

Die Erfindung betrifft eine Vorrichtung (ID) zum Zugriff auf elektronische Fahrzeugkomponenten (ECUa, ECUb, ECUz, ECU1, ECU2, ECUn) mit
- einer ersten Schnittstelle (S1) zum Koppeln mit mindestens einer elektronischen Fahrzeugkomponente und zur bidirektionalen Datenkommunikation mit der mindestens einen elektronischen Fahrzeugkomponente,
- einer zweiten Schnittstelle (S2) zum Koppeln mit einem Computer (SCD) und zur bidirektionalen Datenkommunikation mit dem Computer und
- einer Steuervorrichtung, die ausgebildet ist, Informationen zu Zugriffsabläufen auf die mindestens eine elektronische Fahrzeugkomponente, die in über die zweite Schnittstelle empfangenen Daten enthalten sind, zu speichern und unabhängig vom Computer zu verarbeiten und davon abhängig den Zugriff auf die mindestens eine elektronische Fahrzeugkomponente über die erste Schnittstelle zu steuern.

## Beschreibung

Die Erfindung betrifft eine Vorrichtung zum Zugriff auf elektronische Fahrzeugkomponenten gemäß Anspruch 1.

Im Umfeld der Kraftfahrzeugdiagnose werden Steuergeräte in verschiedenen Anwendungsfällen getestet:
- In der Entwicklung wird ein Steuergerät auf vollständige Lastenheftumsetzung und korrekte Verhaltensweise bei Diagnoseabläufen geprüft;
- in der Produktion wird ein Steuergerät in ein Fahrzeug eingebaut und auf korrekte Funktion im Verbund mit anderen Steuergeräten und Sensoren sowie Aktoren geprüft. Zudem werden dort die Steuergerätekonfiguration, beispielsweise Ländereinstellungen wie Sprache und Wahl der Einheiten, und häufig auch der Download der aktuellsten Firmware in das Steuergerät vorgenommen;
- im Service werden Anwendungsfälle für Wartung und Reparatur benötigt. Hier liegt das Augenmerk auf der Fehleranalyse und auf Indikatoren von Bauteileversagen in näherer Zukunft. Speziell in diesem Bereich legen Automobilhersteller größten Wert auf Effizienz, da dies Gewährleistungs- und Kulanzkosten beeinflusst.

Zur Umsetzung dieser Anwendungsfälle wurden von verschiedenen Fahrzeugherstellern ASAM-Standards eingeführt (siehe auch im Internet http://www.asam.net). Die Familie der ASAM MCD-3 Standards definiert eine objektorientierte Schnittstelle für sogenannte MCD (Measurement, Calibration, Diagnostics)-Systeme, die in Entwicklung, Produktion und Service eingesetzt werden können. Der Vorteil dieser Schnittstelle liegt in der einheitlichen Ansteuerung sämtlicher Diagnose-Anwendungsfälle aus den Applikationen heraus. Dieser Standard ist zudem der erste seiner Art und besitzt eine recht komplexe Schnittstellendefinition. Anwendungen, die auf einer Schnittstelle gemäß einem ASAM-MCD-3 Standard aufsetzen, benötigen daher für eine performante Abarbeitung mindestens eine Umgebung mit einer Rechenleistung, die mit der von aktuellen Personal Computern (PC) vergleichbar ist. Eine Portierung auf kleinere Embedded Systeme ist aufgrund der Komplexität nicht möglich.

Weiterhin ist es bekannt, einen PC über Bussysteme wie beispielsweise CAN (Controller Area Network) an elektronische Fahrzeugkomponenten anzuschließen, um beispielsweise Diagnosedaten auszulesen oder die elektronischen Fahrzeugkomponenten einzustellen oder mit einer neuen Firmware auszustatten.

Im Bereich der Telematik werden ferner derzeit unabhängig voneinander folgende Teilaspekte der Kraftfahrzeugdiagnose betrachtet:
- die Sammlung von Daten über den Fahrzeugzustand, die Ausführung von einfachen Diagnosediensten und deren Visualisierung auf einem mobilen Gerät;
- die Erfassung von Daten zu Wartungszwecken von Kraftfahrzeugen;
   und
- die Ausführung von einfachen Diagnosediensten über eine weite Entfernung zur Fehlersuche.

Um Diagnoseumfänge für die oben genannten Zwecke auszuführen, werden entweder sogenannte "Stand-alone" Geräte mit eigenem Display oder reine Schnittstellenschaltungen verwendet, die zwischen eine elektronische Fahrzeugkomponente und einen PC geschaltet werden und eine Applikation auf dem PC benötigen.

Aufgabe der vorliegenden Erfindung ist es nun, eine verbesserte Vorrichtung zum Zugriff auf elektronische Fahrzeugkomponenten anzugeben.

Diese Aufgabe wird durch eine Vorrichtung zum Zugriff auf elektronische Fahrzeugkomponenten mit den Merkmalen gemäß Anspruch 1 gelöst. Weitere Ausgestaltungen der Erfindung ergeben sich aus den abhängigen Ansprüchen.

Ein wesentlicher Gedanke der Erfindung besteht darin, eine Vorrichtung zum Zugriff auf elektronische Fahrzeugkomponenten derart auszubilden, dass sie in der Lage ist, unabhängig von einem Computer, insbesondere einen PC den Zugriff auf eine elektronische Fahrzeugkomponente zu steuern, d.h. im Prinzip eigenständig Zugriffsabläufe für die Kommunikation mit einer elektronischen Fahrzeugkomponente zu verarbeiten und entsprechend den Datenaustausch mit der elektronischen Fahrzeugkomponenten zu steuern. Mit der Erfindung können die eingangs genannten Teilaspekte der Kraftfahrzeugdiagnose aus dem Bereich Telematik, der Anforderungen aus dem Bereich der klassischen Off-Boad-Diagnose und von zusätzlichen Mehrwertdiensten wie beispielsweise die Personalisierung der Sitzposition über Fahrzeuggrenzen hinweg integriert werden. Weiterhin kann ein asynchroner Zugriff auf elektronische Fahrzeugkomponenten ohne einen PC oder ein spezielles Diagnosegerät ermöglicht werden, so dass keine Rechenzeit eines PC zur Abarbeitung von Diagnoseumfängen benötigt wird.

Eine Ausführungsform der Erfindung betrifft eine Vorrichtung zum Zugriff auf elektronische Fahrzeugkomponenten mit
- einer ersten Schnittstelle zum Koppeln mit mindestens einer elektronischen Fahrzeugkomponente und zur bidirektionalen Datenkommunikation mit der mindestens einen elektronischen Fahrzeugkomponente,
- einer zweiten Schnittstelle zum Koppeln mit einem Computer und zur bidirektionalen Datenkommunikation mit dem Computer und
- einer Steuervorrichtung, die ausgebildet ist, Informationen zu Zugriffsabläufen auf die mindestens eine elektronische Fahrzeugkomponente, die in über die zweite Schnittstelle empfangenen Daten enthalten sind, zu speichern und unabhängig vom Computer zu verarbeiten und davon abhängig den Zugriff auf die mindestens eine elektronische Fahrzeugkomponente über die erste Schnittstelle zu steuern. Die Vorrichtung kann beispielsweise in einer Form vergleichbar mit der eines USB-Memory-Sticks mit mindestens zwei, insbesondere drei Schnittstellen implementiert sein. Beispielsweise können über eine erste Schnittstelle das Fahrzeug (CAN), über eine zweite Schnittstelle einer Server für die Abläufe (UMTS) und über eine dritte Schnittstelle ein lokales Display (WLAN) angebunden werden. Die Steuervorrichtung kann durch einen Mikrokontroller implementiert sein, der durch ein Programm konfiguriert ist, das die über die zweite Schnittstelle empfangene Informationen zu Zugriffsabläufen verarbeitet, beispielsweise eine Diagnosesequenz speichert und ausführt, um Diagnosedaten von elektronischen Fahrzeugkomponenten abzurufen. Durch die Möglichkeit, eigenständig Zugriffsabläufe abzuarbeiten, ermöglicht die erfindungsgemäße Vorrichtung eine asynchrone Nutzung, d.h. ein PC oder Computer ist nicht erforderlich, um auf eine elektronische Fahrzeugkomponente zuzugreifen. Die Informationen zu Zugriffsabläufen können beispielsweise Diagnosesequenzen sein, die Diagnoseanforderungen als Steuerungsinformationen gebündelt enthalten. Im Unterschied zu herkömmlichen reinen Schnittstellen oder Adapterschaltungen zum Zugriff auf elektronische Fahrzeugkomponenten werden Diagnoseanforderungen nicht in Form einzelner Request/Response-Befehle an die elektronischen Fahrzeugkomponenten übertragen. Somit ermöglicht es die erfindungsgemäße Vorrichtung, variable auszuführende Diganoseumfänge zu verarbeiten.

Die Zugriffabläufe können parallel und/oder sequenziell abzuarbeitende Befehle zum Zugriff auf die mindestens eine elektronische Fahrzeugkomponente aufweisen. Mit anderen Worten können die Zugriffsabläufe eigenständige Programme sein, welche den Zugriff auf Fahrzeugkomponenten steuern, also beispielsweise Programme zum Abrufen von Diagnosedaten oder zum Konfigurieren von elektronischen Fahrzeugkomponenten wie das Einstellen von benutzerspezifischen Einstellungen von Komfortfunktionen in einem Fahrzeug. Diese Programme können vor allem außerhalb der erfindungsgemäßen Vorrichtung beispielsweise auf einem PC vorbereitet werden, und dann über die zweite Schnittstelle auf die erfindungsgemäße Vorrichtung übertragen werden, wo sie gespeichert und verarbeitet werden. Die Verarbeitung kann hierbei ohne gekoppelten PC oder Computer erfolgen. Ein Vorteil dieser Vorgehensweise ist vor allem, dass in der erfindungsgemäßen Vorrichtung keine weiteren Daten in existierenden Standardformaten bezüglich elektronischen Fahrzeugkomponenten wie beispielsweise ASAM ODX vorliegen müssen und daher Ressourcen wie Speicherplatz und Umfang der Kommunikation eingespart werden können.

Insbesondere können die Befehle eine oder mehrere der folgenden Aktionen bewirken:
- Schreiben neuer Speicherstände in die mindestens eine elektronische Fahrzeugkomponente, beispielsweise um die Komponente so zu konfigurieren, dass ein gewünschter Betriebszustand eingestellt wird, was für Test- und Diagnosezwecke von Bedeutung sein kann;
- Schreiben neuer Softwarestände in die mindestens eine elektronische Fahrzeugkomponente, insbesondere um die Firmware einer Komponente zu aktualisieren;
- Schreiben neuer Parameter in die mindestens eine elektronische Fahrzeugkomponente, beispielsweise um eine Komponente wie gewünscht einzustellen wie das Einstellen von Radiosendern mit einem Autoradio;
- Schreiben neuer Stellgrößen in die mindestens eine elektronische Fahrzeugkomponente, beispielsweise um benutzerspezifische Einstellung wie die Sitzhöhe oder die passende Positionierung der Rückspiegel automatisch einzustellen;
- Lesen von Benutzereinstellungen (Upload);
- Lesen von Steuergeräteinformationen.

Die Steuervorrichtung kann ferner ausgebildet sein, Informationen zur Visualisierung zu verarbeiten und über die erste und/oder zweite Schnittstelle zu empfangen und/oder zu übertragen, beispielsweise für ein UCH-fähiges Steuergerät. Somit können multimodal Anweisungen an die erfindungsgemäße Vorrichtung gegeben oder von dieser erhalten werden. Zur Visualisierung und/oder Eingabe können verschiedene Geräte wie beispielsweise den Bildschirm einer Head-Unit, ein Tastenfeld im Fahrzeug, ein PDA (Personal Digital Assistant), PNA (Personal Navigation Assistant), ein Mobiltelefon und dergleichen verwendet werden.

Weiterhin kann die Steuervorrichtung ausgebildet sein, zusätzlich zu Diagnosedaten Multimediadaten zu verarbeiten und über die erste und/oder zweite Schnittstelle zu empfangen und/oder zu übertragen. Bisherige an Fahrzeuge anschließbare externe Vorrichtungen übertragen entweder nur Diagnosedaten oder Multimediadaten, nicht aber beides.

Die Steuervorrichtung kann insbesondere eine virtuelle Maschine zur Abarbeitung von Bytekode darstellen, insbesondere implementieren, der in Daten enthalten ist, die über die zweite Schnittstelle empfangen werden. Insbesondere kann durch die Abarbeitung von Bytekode die Latenzzeit, die bei der Übertragung einer Anforderung wie beispielsweise einer Diagnoseanforderung und deren Ausführung und Rückübertragung der Antwort entsteht, deutlich verrringert werden, da mehrere Anforderungen in der erfindungsgemäßen Vorrichtung verarbeitet werden können. Insgesamt können somit die (Echtzeit-)Anforderungen an den Übertragungskanal zwischen der erfindungsgemäßen Vorrichtung und einem als Server oder Client agierenden PC bzw. Computer sinken.

Weiterhin kann die Steuervorrichtung zur Echtzeitkommunikation ausgebildet sein. Hierdurch können störende Verzögerungen in den Kommunikationskanälen verringert werden.

Um benutzerspezifische Daten zu speichern, kann die Vorrichtung personalisiert werden. Dies ermöglicht es, die erfindungsgemäße Vorrichtung als eine Art Speicherstick für benutzerspezifische Daten wie Sitzhöhe, Rückspiegelpositionierung und dergleichen einzusetzen.

Die erste Schnittstelle der Vorrichtung kann durch die Steuervorrichtung zur Datenkommunikation nach dem CAN- oder TCP/IP-Protokol konfiguriert werden. Hierdurch kann die erfindungsgemäße Vorrichtung flexibel mit verschiedenen Kommunikationsschnittstellen in Fahrzeugen gekoppelt und daher universell eingesetzt werden.

Die zweite Schnittstelle der Vorrichtung kann zur Datenkommunikation nach einem oder mehreren der folgenden Kommunikationsprotokolle ausgebildet sein: TCP/IP; WLAN (Wireless Local Area Network); GPRS (General Paket Radio Service); UMTS (Universal Mobile Telecommunication System); Bluetooth®; HSPA(+) (High Speed Packet Access); LTE (Long Term Evolution); UMB (Ultra Mobile Broadban). Dies ermöglicht die Kopplung mit einem als Server oder Client agierenden PC bzw. Computer mit verschieden Kommunikationsschnittstellen. Durch den Einsatz von WLAN und Bluetooth® wird eine komfortable drahtlose Anbindung über kurze Distanzen, beispielsweise in einer Servicestelle ermöglicht. GPRS und UMTS ermöglichen dagegen eine Fernanbindung und damit Fernwartung von elektronischen Fahrzeugkomponenten.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

### Die Zeichnungen zeigen in

Fig. 1 die prinzipielle Kopplung eines Server-/Client-Dienstes über die Vorrichtung zum Zugriff auf elektronische Fahrzeugkomponenten gemäß der Erfindung mit einem Fahrzeug;
Fig. 2 die Kopplung eines Server-/Client-Dienstes über die Vorrichtung zum Zugriff auf elektronische Fahrzeugkomponenten gemäß der Erfindung mit einem Fahrzeug im Detail;
Fig. 3 die asynchrone Verwendung der Vorrichtung zum Zugriff auf elektronische Fahrzeugkomponenten gemäß der Erfindung; und
Fig. 4 ein Blockschaltbild eines Ausführungsbeispiels der Vorrichtung zum Zugriff auf elektronische Fahrzeugkomponenten gemäß der Erfindung;
Fig. 5 die Aufbereitung von Steuerinformationen und Diagnosesequenzen außerhalb der Vorrichtung zum Zugriff auf elektronische Fahrzeugkomponenten und Übertragung als Bytekode auf die Vorrichtung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

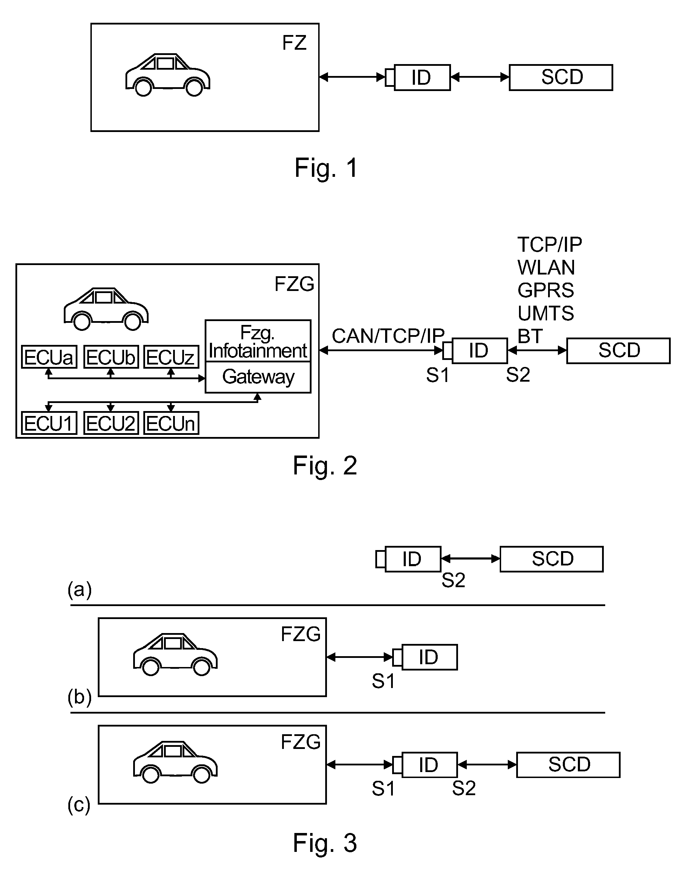

Fig. 1 zeigt grob schematisch die Kopplung eines Computers SCD, der einen Server- oder Client-Dienst ausführt, zum Zugriff auf elektronische Komponenten eines Fahrzeugs FZ über die dazwischen geschaltete erfindungsgemäße Vorrichtung ID. Die Vorrichtung ID kann fest im Fahrzeug FZ verbaut sein, beispielsweise als elektronische Einheit oder in Form einer Softwarekomponente in der Head-Unit des Fahrzeugs FZ implementiert sein, oder auch adaptierbar oder abnehmbar an das Fahrzeug FZ angeschlossen sein, beispielsweise in Form eines intelligenten elektronischen Sticks.

Wie in Fig. 2 gezeigt ist, besitzt die Vorrichtung ID zwei Schnittstellen:
1. Die erste Schnittstelle S1 stellt eine Verbindung zu elektronischen/elektrischen Komponenten im Fahrzeug FZ für einen bidirektionalen Datenaustausch her. Diese elektronischen/elektrischen Komponenten können Steuergeräte (ECU, Gateway), welche für die Funktionalität und Steuerung des Fahrzeugs FZ verbaut sind, beispielsweise Motorsteuergeräte, Getriebesteuergeräte, Bedienfelder, Multimediakomponenten wie Radio, Navigation, MP3-Player, CD/DVD-Player. Die Kommunikation mit den elektronischen/elektrischen Komponenten kann gemäß dem CAN- oder auch dem TCP-IP-Protokol erfolgen.
2. Die zweite Schnittstelle S2 dient dem bidirektionalen Datenaustausch mit dem Server-/Client-Dienst, der auf dem Computer SCD ausgeführt wird.

Die beiden Schnittstelle S1 und S2 können für sich alleine mit der Vorrichtung ID verbunden und deren Funktionalität jeweils alleine verwendet werden. Insbesondere ist für die Funktionalität der Schnittstelle S1 nicht erforderlich, dass die Schnittstelle S2 mit dem Computer SCD verbunden ist. Daher können die Schnittstellen S1 und S2 asynchron verwendet werden, wie in Fig. 3 schematisch dargestellt ist: in (a) sind die Vorrichtung ID und der Computer SCD miteinander verbunden, so dass Daten vom Computer SCD an die Vorrichtung ID übertragen werden können; in (b) ist Vorrichtung ID mit einer Schnittstelle im Fahrzeug FZG verbunden, so dass ein Datenaustausch zwischen Komponenten des Fahrzeugs FZG und der Vorrichtung ID erfolgen kann; in (c) ist die Vorrichtung ID zwischen den Computer SCD und die Schnittstelle des Fahrzeugs FZG geschaltet, so dass ein Datenaustausch der Vorrichtung ID sowohl mit Fahrzeugkomponenten als auch mit dem Computer SCD stattfinden kann.

Mit der Vorrichtung kann auf die Steuergeräte ECUa, ECUb, ECUz, ECU1, ECU2, ECUn, das Fahrzeug-Infortainmentsystem und das Gateway zugegriffen werden. Ein Zugriff im Sinne der vorliegenden Erfindung bedeutet hierbei, dass Diagnosedaten von den elektronischen Fahrzeugkomponenten ausgelesen, Diagnoseroutinen durchgeführt, Einstellungen der Fahrzeugkomponenten und Laden von Firmware vorgenommen werden können. Ein Zugriff umfasst also einen lesenden und schreibenden Zugriff auf die Fahrzeugkomponenten.

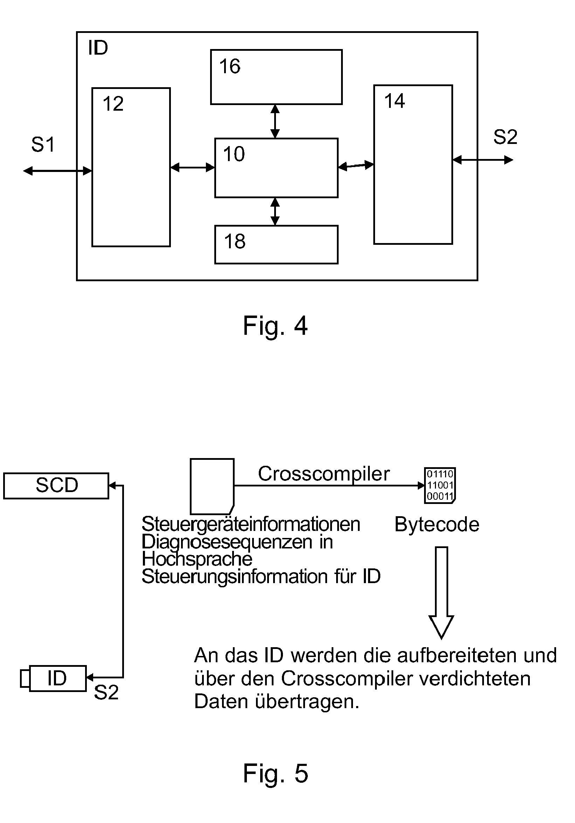

Fig. 4 zeigt ein Blockschaltbild der Vorrichtung ID zum Zugriff auf Fahrzeugkomponenten mit der ersten und zweiten Schnittstelle S1 bzw. S2. Die Vorrichtung in Form eines Sticks weist einen Mikrokontroller 10 auf, der mit einer ersten und einer zweiten Schnittstellenschaltung 12 bzw. 14 verbunden ist und diese steuert. Der Mikrokontroller 10 ist mit einem Betriebsprogrammspeicher 16 verbunden, in dem ein Betriebsprogramm abgelegt ist, das eine virtuelle Maschine zur Ausführung von Bytekode implementiert. Weiterhin ist ein Speicher 18 mit dem Mikrokontroller 10 verbunden, der mit einem vom Computer SCD erstellten Zugriffsprogramm auf die Fahrzeugkomponenten beschrieben werden kann, das über die zweite Schnittstelle S2 empfangen werden kann.

Die Daten an der ersten Schnittstelle S1 können Diagnosedaten entsprechend existierenden Diagnoseprotokollen wie beispielsweise ISO 9141, ISO 14230/KWP2000, ISO 15765/CAN-Bus, SAE J1850, als auch Multimediadaten wie bespielsweise Navigationsinformationen, Radio-Senderinformationen, Audio-/Video-Daten, Personalisierungsdaten wie Sitzposition sein. Die Daten beinhalten Informationen zur Steuerung, Parametrierung der Fahrzeugkomponenten und Informationen für den Fahrer. Als Kommunikationsprotokolle können von der Schnittstelle S1 sowohl CAN als auch TCP/IP verwendet werden, je nachdem wie der Mikrokontroller 10 die erste Schnittstellenschaltung 12 konfiguriert.

Die Daten an der zweiten Schnittstelle S2 umfassen ebenfalls die Daten wie an der ersten Schnittstelle S1 und zusätzlich Steuerungsinformationen für die Vorrichtung ID. Diese Steuerungsinformationen sind insbesondere Informationen zu Zugriffsabläufen auf eine Fahrzeugkomponente, die in den Daten enthalten sein können, die über die zweite Schnittstelle S2 vom Computer SCD empfangen werden. Als Kommunikationsprotokolle können von der Schnittstelle S2 prinzipiell verschiede insbesondere im PC-Bereich gängige Protokolle wie TCP/IP, WLAN, GPRS, UMTS oder Bluetooth® verwendet werden, je nachdem welche Protokolle und Kommunikationsmöglichkeiten die zweite Schnittstellenschaltung 14 beherrscht. Beispielsweise kann vorgesehen sein, dass die zweite Schnittstellenschaltung 14 ein Funkmodul umfasst, das WLAN, GPRS, UMTS und Bluetooth® beherrscht, wie es beispielsweise in sogenannten Smartphones zum Einsatz kommt. Ferner kann der Mikrokontroller 10 Protokoll-Stacks für die vom Funkmodul bereitgestellten Kommunikationstechnologien implementieren und für WLAN, GPRS und UMTS TCP/IP als Kommunikationsprotokoll mit dem Computer SCD verwenden. Dadurch ist ein flexible Kommunikation mit der Vorrichtung ID über die zweite Schnittstelle möglich.

Die Kommunikationsprotokolle der beiden Schnittstellen S1 und S2 können sich unterscheiden, d.h. die erste Schnittstelle S1 kann beispielsweise über CAN mit einer Fahrzeugkomponente kommunizieren, während die zweite Schnittstelle S2 mittels TCP/IP über eine WLAN-Kommunikationsverbindung mit dem Computer SCD kommuniziert. Der Einsatz des jeweiligen Kommunikationsprotokolls an der ersten bzw. zweiten Schnittstelle S1 bzw. S2 hängt von den Fähigkeiten der Gegenstelle ab und kann entsprechend dem Bedarf vom Mikrokontroller 10 eingestellt werden.

Wie bereits oben erwähnt wurde, sind die über die zweite Schnittstelle S2 empfangbaren Daten insbesondere Informationen zu Zugriffsabläufen auf eine Fahrzeugkomponente. Typischerweise weisen die Informationen zu Zugriffsabläufen eine Sequenz von Diagnoseanforderungen als auch Steuerungsinformationen für die Vorrichtung ID auf, die festlegen, wie die Daten von den beiden Schnittstellen S1 und S2 in der Vorrichtung ID verarbeitet und weitergeleitet werden. Die über die zweite Schnittstelle S2 empfangbaren Daten können ferner Steuergeräteinformationen wie beispielsweise Parametersets für bestimmte Steuergeräte und Diagnosesequenzen für Fahrzeugkomponenten enthalten.

Die Steuerungsinformationen für die Vorrichtung ID und die Diagnosesequenzen in einer Hochsprache können wie in Fig. 5 gezeigt von einem Crosscompiler in Bytekode übersetzt werden, der für die vom Betriebsprogramm des Mikrokontrollers implementierte virtuelle Maschine vorgesehen ist. Der so außerhalb der Vorrichtung ID insbesondere vom Server-/Client-Dienst des Computers SCD aufbereitete Bytekode kann an die Vorrichtung ID über die zweite Schnittstelle S2 übertragen, im Speicher 18 abgelegt und von der virtuellen Maschine ausgeführt werden, um den Datenaustausch über die erste Schnittstelle S1 und den Zugriff auf die Fahrzeugkomponenten zu steuern.

Die Vorrichtung ID kann ferner personalisiert werden, damit sie eindeutig einem Benutzer oder einem Fahrzeug zugeordnet ist. Dadurch kann die Sicherheit bei der Benutzung der Vorrichtung ID erhöht werden. Vor der Übertragung oder Verarbeitung von Daten auf der Vorrichtung ID kann eine Sicherheitsabfrage stattfinden, so dass nur ein autorisierter Zugriff über die Schnittstellen S1 und S2 erfolgt. Die Autorisierung zur Nutzung der Schnittstellen S1 und S2 kann hierbei unterschiedlich implementiert sein. Beispielsweise können verschiedene Autorisierungsstufen wie "Besitzer", "Werkstatt", "Hersteller" unterschieden werden, denen unterschiedliche Berechtigungen zugeteilt werden können. Denkbar ist beispielsweise, dass dem "Besitzer" lediglich Lesefunktionen von Fahrzeuginformationen und Einstellungen bestimmter Fahrzeugkomponenten nutzen kann, der "Werkstatt" umfassende Servicefunktionen wie Diagnosefunktionen und Firmware-Update-Funktionen und dem "Hersteller" alle möglichen Funktionen erlaubt sind.

Weiterhin kann vorgesehen sein, dass bestimmte Daten aus dem Fahrzeug bzw. von Fahrzeugkomponenten, z.B. eine Lokalisierung des Fahrzeugs oder Informationen über Fahr-/Ruhezeiten des Fahrzeugs, durch die Vorrichtung ID nur dann übertragen werden können, wenn der Server-/Client-Dienst des Computers SCD entsprechende Berechtigungen besitzt.

Mit der Erfindung kann der Zugriff auf elektronische Fahrzeugkomponenten wie Steuergeräte, Sensoren, Aktoren und dergleichen an einen Fahrzeugbus und eine Fahrzeugschnittstelle gekoppelte elektronische Geräte im Fahrzeug verbessert, insbesondere erleichtert werden.

### Bezugszeichen und Glossar

- 10: Mikrokontroller
- 12: erste Schnittstellenschaltung
- 14: zweite Schnittstellenschaltung
- 16: Betriebsprogrammspeicher
- 18: Speicher
- ID: Vorrichtung zum Zugriff auf elektronische Fahrzeugkomponenten
- FZ: Kraftfahrzeug
- SCD: Server-/Client-Dienst-Computer
- S1: erste Schnittstelle
- S2: zweite Schnittstelle
- ECUa: Steuergerät
- ECUb: Steuergerät
- ECUz: Steuergerät
- ECU1: Steuergerät
- ECU2: Steuergerät
- ECUn: Steuergerät
- UCH: Universal Control Hub

## Patentansprüche

1. Vorrichtung (ID) zum Zugriff auf elektronische Fahrzeugkomponenten (ECUa, ECUb, ECUz, ECU1, ECU2, ECUn) mit
- einer ersten Schnittstelle (12, S1) zum Koppeln mit mindestens einer elektronischen Fahrzeugkomponente und zur bidirektionalen Datenkommunikation mit der mindestens einen elektronischen Fahrzeugkomponente,
- einer zweiten Schnittstelle (14, S2) zum Koppeln mit einem Computer (SCD) und zur bidirektionalen Datenkommunikation mit dem Computer und
- einer Steuervorrichtung (10), die ausgebildet ist, Informationen zu Zugriffsabläufen auf die mindestens eine elektronische Fahrzeugkomponente, die in über die zweite Schnittstelle empfangenen Daten enthalten sind, zu speichern und unabhängig vom Computer zu verarbeiten und davon abhängig den Zugriff auf die mindestens eine elektronische Fahrzeugkomponente über die erste Schnittstelle zu steuern.

2. Vorrichtung nach Anspruch 1,
**dadurch gekennzeichnet, dass**
die Zugriffabläufe parallel und/oder sequenziell abzuarbeitende Befehle zum Zugriff auf die mindestens eine elektronische Fahrzeugkomponente aufweisen.

3. Vorrichtung nach Anspruch 2,
**dadurch gekennzeichnet, dass**
die Befehle eine oder mehrere der folgenden Aktionen bewirken:
- Schreiben neuer Speicherstände in die mindestens eine elektronische Fahrzeugkomponente;
- Schreiben neuer Softwarestände in die mindestens eine elektronische Fahrzeugkomponente;
- Schreiben neuer Parameter in die mindestens eine elektronische Fahrzeugkomponente;
- Schreiben neuer Stellgrößen in die mindestens eine elektronische Fahrzeugkomponente;
- Lesen von Benutzereinstellungen (Upload);
- Lesen von Steuergeräteinformationen.

4. Vorrichtung nach einem der vorhergehenden Ansprüche,
**dadurch gekennzeichnet, dass**
die Steuervorrichtung ferner ausgebildet ist, Informationen zur Visualisierung zu verarbeiten und über die erste und/oder zweite Schnittstelle zu empfangen und/oder zu übertragen.

5. Vorrichtung nach einem der vorhergehenden Ansprüche,
**dadurch gekennzeichnet, dass**
die Steuervorrichtung ferner ausgebildet ist, zusätzlich zu Diagnosedaten Multimediadaten zu verarbeiten und über die erste und/oder zweite Schnittstelle zu empfangen und/oder zu übertragen.

6. Vorrichtung nach einem der vorhergehenden Ansprüche,
**dadurch gekennzeichnet, dass**
die Steuervorrichtung eine virtuelle Maschine zur Abarbeitung von Bytekode darstellt, der in Daten enthalten ist, die über die zweite Schnittstelle empfangen werden.

7. Vorrichtung nach einem der vorhergehenden Ansprüche,
**dadurch gekennzeichnet, dass**
die Steuervorrichtung ferner zur Echtzeitkommunikation ausgebildet ist.

8. Vorrichtung nach einem der vorhergehenden Ansprüche,
**dadurch gekennzeichnet, dass**
sie personalisiert werden kann, um benutzerspezifische Daten zu speichern.

9. Vorrichtung nach einem der vorhergehenden Ansprüche,
**dadurch gekennzeichnet, dass**
die erste Schnittstelle durch die Steuervorrichtung zur Datenkommunikation nach dem CAN- oder TCP/IP-Protokol konfiguriert werden kann.

10. Vorrichtung nach einem der vorhergehenden Ansprüche,
**dadurch gekennzeichnet, dass**
die zweite Schnittstelle zur Datenkommunikation nach einem oder mehreren der folgenden Kommunikationsprotokolle ausgebildet ist: TCP/IP; WLAN; GPRS; UMTS; Bluetooth®; HSPA(+) (High Speed Packet Access); LTE (Long Term Evolution); UMB (Ultra Mobile Broadband).
